# EUROPÄISCHE PATENTSCHRIFT

(11) **EP 3 147 135 B1**
(45) Veröffentlichungstag und Bekanntmachung des Hinweises auf die Patenterteilung: **18.11.2020**
(21) Anmeldenummer: 15186744.7
(22) Anmeldetag: 24.09.2015
(51) Int. Cl.: B44C 5/04, B29C 39/16

(54) **VERFAHREN ZUR HERSTELLUNG EINES DEKORIERTEN WAND- ODER BODENPANEELS**
METHOD FOR PRODUCING A DECORATED WALL OR FLOOR PANEL
PROCEDE DE FABRICATION D'UN PANNEAU MURAL OU DE SOL DECORE

(43) Veröffentlichungstag der Anmeldung: 29.03.2017
(73) Patentinhaber: Akzenta Paneele + Profile GmbH, 56759 Kaisersesch (DE)
(72) Erfinder: HANNIG, Hans-Jürgen, 51427 Bergisch Gladbach (DE)
(74) Vertreter: Michalski Hüttermann & Partner Patentanwälte mbB

(56) Entgegenhaltungen:
- EP-A1- 2 829 415
- WO-A1-2016/091819
- DE-A1- 19 722 339
- DE-A1-102013 105 728
- US-A1- 2009 305 008

## Beschreibung

Die vorliegende Erfindung betrifft ein Trägermaterial zum Herstellen eines dekorierten Wand- oder Bodenpaneels. Die vorliegende Erfindung betrifft ferner ein Bodenpaneel, das ein derartiges Trägermaterial aufweist, sowie ein Verfahren zum Herstellen eines dekorierten Wand- oder Bodenpaneels.

Dekorierte Paneele sind an sich bekannt, wobei unter dem Begriff Wandpaneel auch Paneele zu verstehen sind, die zur Decken- oder Türbekleidung geeignet sind. Sie bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist. Auch die Deckschicht und die übrigen Schichten werden meist aus Harz hergestellt.

Aus dem Dokument EP 2 829 415 A1 ist ferner ein Verfahren zur Herstellung eines dekorierten Wand- oder Bodenpaneels bekannt, bei dem ausgehend von einem granularen Trägermaterial ein Träger und anschließende ein Paneel geformt wird. Bei einem derartigen Verfahren kann beispielsweise ein WPC als Trägermaterial Verwendung finden.

Die US 2009/0305008 A1 beschreibt eine orientierte Polymerzusammensetzung mit einem dekorativen Aussehen hergestellt durch ein Verfahren umfassend das Extrudieren einer orientierbaren Polymerzusammensetzung aus einem Extruder, das Leiten der orientierbaren Polymerzusammensetzung durch einen Kalibrator und das anschließende Ziehen der orientierbaren Polymerzusammensetzung bei einer Ziehtemperatur zur Bildung eine orientierte Polymerzusammensetzung, wobei das Verfahren ferner das Aufbringen eines Färbemittels auf eine Oberfläche der orientierten Polymerzusammensetzung in einem Muster mit einer Breite von mindestens 5 mm umfasst.

Die Herstellung der Paneele kann dabei unter Umständen noch Verbesserungspotential bieten. Verbesserungspotential kann sich dabei insbesondere bezüglich der Feuchteresistenz und der Wärmeresistenz bieten.

Es ist daher die Aufgabe der vorliegenden Erfindung, ein verbessertes Verfahren zur Herstellung von dekorierten Wand- oder Bodenpaneelen bereitzustellen.

Gelöst wird diese Aufgabe durch ein Trägermaterial gemäß Anspruch 1. Gelöst wird diese Aufgabe ferner durch ein Paneel gemäß Anspruch 13 sowie durch ein Verfahren gemäß Anspruch 14. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt. Insbesondere können die nachstehend genannten Mengenangaben und Eigenschaften der jeweiligen Materialien beziehungsweise Substanzen beliebig mit einander kombiniert werden.

Mit der Erfindung wird ein Trägermaterial zur Herstellung eines Trägers für ein dekoriertes Wand- oder Bodenpaneel vorgeschlagen. Das Trägermaterial weist ein einen Kunststoff aufweisendes Matrixmaterial und ein Feststoffmaterial auf, wobei das Feststoffmaterial zu wenigstens 50 Gew.-%, insbesondere zu wenigstens 80 Gew.-%, besonders bevorzugt zu wenigstens 95 Gew.-%, bezogen auf das Feststoffmaterial, durch Talkum gebildet ist. Dabei liegt das Matrixmaterial in einer Menge, bezogen auf das Trägermaterial, von ≥ 30 Gew.-% bis ≤ 70 Gew.-%, insbesondere von ≥ 40 Gew.-% bis ≤ 60 Gew.-%, vor und liegt das Feststoffmaterial, bezogen auf das Trägermaterial, in einer Menge, bezogen auf das Trägermaterial, von ≥ 30 Gew.-% bis ≤ 70 Gew.-%, insbesondere von ≥ 40 Gew.-% bis ≤ 60 Gew.-%, beispielsweise kleiner oder gleich 50 Gew.-% vor. Weiterhin ist es vorgesehen, dass das Trägermaterial und das Feststoffmaterial gemeinsam, bezogen auf das Trägermaterial in einer Menge von ≥ 95 Gew.-%, insbesondere ≥ 99 Gew.-%, vorliegen, wobei das Matrixmaterial Polypropylen umfasst, wobei das Polypropylen eine Mischung aus einem Homopolymer und einem Copolymer aufweist, wobei die Schmelzflussrate des Homopolymers größer ist als die Schmelzflussrate des Copolymers..

Es konnte in überraschender Weise gezeigt werden, dass ein derartiges Trägermaterial das Herstellen eines Wand- oder Bodenpaneels mit einer verbesserten Feuchteresistenz ermöglicht, insbesondere mit einer reduzierten feuchte- oder hitzebedingten Quellung.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga.

Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "schüttfähigen" Material kann insbesondere ein Material verstanden werden, welches durch einen Schüttvorgang beziehungsweise Streuvorgang auf eine Unterlage aufgebracht werden kann. Dabei kann das Material als Fluid vorliegen oder insbesondere als schüttfähiger Feststoff.

Ferner kann unter einem "Granulat" beziehungsweise einem "granularen Material" ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger dem Paneel bereits eine geeignete Stabilität verleihen oder zu dieser beitragen.

Entsprechend kann unter einem Trägermaterial ein derartiges Material verstanden werden, welches den Träger zumindest zu einem mehrwiegenden Teil bildet. Insbesondere kann der Träger aus dem Trägermaterial bestehen.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Ein vorbeschriebenes Trägermaterial dient somit insbesondere der Herstellung eines Trägers für ein dekoriertes Wand- oder Bodenpaneel. Das Trägermaterial weist im Wesentlichen zwei Materialen auf, wobei unter einem Material im Sinne der vorliegenden Erfindung sowohl ein homogenes Material, also ein aus nur einer Substanz ausgebildetes Material, wie auch ein heterogenes Material, also ein aus wenigstens zwei Substanzen bestehendes Material, verstanden werden kann, wobei letzteres Material somit auch als Substanzmischung verstanden werden kann.

Im Detail umfasst das Trägermaterial ein Feststoffmaterial und ein Matrixmaterial. Das Feststoffmaterial ist dabei zu wenigstens 50 Gew.-%, insbesondere zu wenigstens 80 Gew.-%, beispielsweise zu 100%, bezogen auf das Feststoffmaterial, durch Talkum gebildet. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann. Somit ist der Feststoffanteil vorteilhafter Weise zumindest durch einen Großteil aus dem mineralischen Stoff Talkum gebildet, wobei dieser Stoff etwa als Pulverform eingesetzt werden kann beziehungsweise in dem Trägermaterial in Form von Partikeln vorliegen kann. Grundsätzlich kann das Feststoffmaterial aus einem pulverförmigen Feststoff bestehen.

Vorteilhaft kann es sein, wenn die spezifische Oberflächendichte nach BET, ISO 4652 der Talkum-Partikel in einem Bereich liegt von ≥ 4 m²/g bis ≤ 8 m²/g, etwa in einem Bereich von ≥ 5 m²/g bis ≤ 7 m²/g.

Weiterhin kann es vorteilhaft sein, wenn das Talkum bei einer Schüttdichte nach DIN 53468 vorliegt in einem Bereich von ≥ 0,15 g/cm³ bis ≤ 0,45 g/cm³, etwa in einem Bereich von ≥ 0,25 g/cm³ bis ≤ 0,35 g/cm³.

Das Matrixmaterial dient insbesondere dazu, bei dem fertig hergestellten Träger das Feststoffmaterial aufzunehmen beziehungsweise einzubetten. Das Matrixmaterial weist dabei einen Kunststoff oder eine Kunststoffmischung auf. Insbesondere mit Bezug auf das Herstellungsverfahren, wie dies nachfolgend im Detail beschrieben ist, kann es vorteilhaft sein, dass das Matrixmaterial einen thermoplastischen Kunststoff aufweist. Dadurch wird es ermöglicht, dass das Trägermaterial beziehungsweise ein Bestandteil des Trägermaterials einen Schmelzpunkt oder einen Erweichungspunkt aufweist, um das Trägermaterial in einem weiteren Verfahrensschritt durch Hitzeeinwirkung zu Formen, wie dies nachstehend mit Bezug auf das Verfahren im Detail beschrieben ist. Das Matrixmaterial kann insbesondere aus einem Kunststoff beziehungsweise einem Kunststoffgemisch und gegebenenfalls einem Haftvermittler bestehen. Bevorzugt können diese Komponenten zumindest 90Gew.-%, besonders bevorzugt zumindest 95 Gew.-%, insbesondere wenigstens 99 Gew.-% des Matrixmaterials ausmachen.

Im Detail ist es ferner vorgesehen, dass das Matrixmaterial in einer Menge, bezogen auf das Trägermaterial, von ≥ 30 Gew.-% bis ≤ 70 Gew.-%, insbesondere von ≥ 40 Gew.-% bis ≤ 60 Gew.-% vorliegt. Weiterhin ist es vorgesehen, dass das Feststoffmaterial, bezogen auf das Trägermaterial, in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt.

In Abhängigkeit des gewünschten Anwendungsgebietes und der gewünschten Eigenschaften des Paneels können die Anteile an Matrixmaterial beziehungsweise Feststoffmaterial wählbar sein. Dadurch kann eine gute Adaptierbarkeit an das gewünschte Anwendungsgebiet möglich werden. Grundsätzlich kann es jedoch bevorzugt sein, dass der Anteil des Feststoffmaterials kleiner oder bevorzugt größer oder gleich dem Anteil des Matrixmaterials ist.

Mit Bezug auf das Trägermaterial ist es weiterhin vorgesehen, dass das Matrixmaterial und das Feststoffmaterial gemeinsam, bezogen auf das Trägermaterial, in einer Menge von ≥ 95 Gew.-%, insbesondere ≥ 99 Gew.-%, vorliegen. In anderen Worten kann es vorgesehen sein, dass neben dem Feststoffmaterial und dem Matrixmaterial in dem Trägermaterial weitere Substanzen lediglich in einem Anteil, bezogen auf das Trägermaterial, von < 5 Gew.-%, vorzugsweise von < 1 Gew.-% vorliegen. Somit kann es vorteilhaft sein, dass das Trägermaterial zu einem Großteil aus dem Feststoffmaterial und dem Matrixmaterial besteht. Besonders bevorzugt kann es vorgesehen sein, dass das Matrixmaterial und das Feststoffmaterial gemeinsam, bezogen auf das Trägermaterial, in einer Menge von 100 Gew.-%, vorliegen, das Trägermaterial somit aus dem Matrixmaterial und dem Feststoffmaterial besteht.

Durch eine Beschränkung der Materialien des Trägermaterials und damit durch eine geringe Anzahl an Materialien zum Herstellen des Trägers kann der Träger besonders kostengünstig erzeugbar sein. Darüber hinaus kann die Prozessführung der Herstellung eines Trägers beziehungsweise eines Paneels sehr einfach sein, so dass auch die Herstellung einfach und kostenlos möglich ist.

Ein vorbeschriebenes Trägermaterial bietet weiterhin insbesondere den Vorteil, ein Paneel mit einer guten Feuchteresistenz zu ermöglichen. Insbesondere kann unter Verwendung eines Trägermaterials, wie dies vorstehend beschrieben ist, signifikant reduziert oder sogar vollständig verhindert werden, dass ein aus dem Trägermaterial hergestelltes Paneel bei Feuchteeinwirkung aufquillt. Ferner kann auch eine hitzebedingte Ausdehnung verhindert oder zumindest signifikant reduziert werden. Dadurch wird es möglich, dass ein Verlegen beziehungsweise Anbringen von mit dem Trägermaterial hergestellten Paneelen deutlich vereinfacht wird und/oder dass Probleme nach dem Verlegen beziehungsweise Anbringen der Paneele deutlich reduziert werden.

Gleichzeitig bietet das Trägermaterial den Vorteil, dass hiermit erzeugte Paneele eine sehr gute Stabilität aufweisen, so dass die Gefahr von Beschädigungen des Paneels während des Transports und während des Gebrauchs äußerst gering sind. Dies kann insbesondere durch das Feststoffmaterial erreicht werden, also insbesondere durch das enthaltene Talkum.

Dadurch, dass das Matrixmaterial einen thermoplastischen Kunststoff aufweist, kann es trotz der hohen Stabilität ermöglicht werden, dass aus dem Trägermaterial erzeugte Paneele sehr elastisch beziehungsweise federnd sein können, was einen komfortablen Eindruck beim Begehen erlaubt und ferner die auftretenden Geräusche bei einem Begehen im Vergleich zu herkömmlichen Materialien reduzieren kann, somit ein verbesserter Trittschall realisierbar sein kann.

Thermoplastische Kunststoffe bieten ferner den Vorteil, dass die aus ihnen hergestellten Produkte sehr leicht rezykliert werden können. Hierdurch ergibt sich eine weitere Möglichkeit zur Senkung der Herstellungskosten.

Ein aus dem Trägermaterial hergestellter Träger kann weiterhin problemlos mit einem Dekor versehen werden. Beispielsweise eignet sich ein derartiger Träger sehr gut für ein Bedrucken insbesondere mit einem Digitaldruckverfahren, beispielsweise einem Tintenstrahldruckverfahren. Dadurch lassen sich derartige Träger problemlos mit einem qualitativ hochwertigen Dekor versehen, was das Herstellen eines hochwertigen Paneels erlauben kann.

Bevorzugt kann es vorgesehen sein, dass Talkum in Form von Partikeln vorliegt, die eine Partikelgröße D₅₀ aufweisen in einem Bereich von ≥ 2µm bis ≤ 7µm, beispielsweise von ≥ 3µm bis ≤ 6µm, vorzugsweise in einem Bereich von ≥ 4µm bis ≤ 5µm, beispielsweise von 4,5 µm, und/oder dass das Talkum in Form von Partikeln vorliegt, die eine Partikelgröße D₉₈ aufweisen in einem Bereich von ≥ 10 µm bis ≤ 30gm, vorzugsweise in einem Bereich von ≥ 15µm bis ≤ 20µm, beispielsweise von 17 µm. Der Anteil an Partikeln, die eine Größe von weniger als 2µm aufweisen, kann bei 18% liegen. Insbesondere derartige Talkum-Partikel bieten den Vorteil, dass diese eine besonders schonende Herstellung des Trägers ermöglichen, da sie problemlos in dem Matrixmaterial eingebettet werden können und damit keinen abrasiven Effekt auf verwendete Presseinheiten ausüben. Darüber hinaus lassen sich insbesondere unter Verwendung von Talkum-Partikeln in den vorgegebenen Partikelgrößenverteilungen Träger beziehungsweise Paneele mit bevorzugten mechanischen Eigenschaften erzeugen.

Zur Bestimmung der Partikelgrößenverteilung kann auf die allgemein bekannten Verfahren, wie beispielsweise die Laserdiffraktometrie, zurückgegriffen werden, mit welcher Partikelgrößen im Bereich von einigen Nanometern bis hin zu mehreren Millimetern bestimmt werden können. Mittels dieser Methode lassen sich auch D₅₀ bzw. D₉₈ Werte ermitteln, welche jeweils aussagen, dass 50% (D₅₀) bzw. 98% (D₉₈) der gemessenen Partikel kleiner sind als der jeweils angegebene Wert.

Das Matrixmaterial umfasst Polypropylen, wobei das Polypropylen eine Mischung aus einem Homopolymer und einem Copolymer aufweist. Polypropylen ist als Matrixmaterial besonders geeignet, da es zum einen kostengünstig erhältlich ist und ferner als thermoplastischer Kunststoff gute Eigenschaften als Matrixmaterial zum Einbetten des Feststoffmaterials aufweist. Dabei kann insbesondere eine Mischung aus einem Homopolymer und einem Copolymer für das Matrixmaterial besonders vorteilhafte Eigenschaften ermöglichen. Derartige Materialien bieten ferner den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann.

Als Copolymer kann beispielsweise ein solches Verwendung finden, das aus Propylen und Ethylen als Monomereinheiten aufgebaut ist, beispielsweise daraus besteht.

Durch das Verwenden eines Homopolymers kann insbesondere eine hohe Schmelzflussrate ermöglicht werden, wobei die Schmelzflussrate des Homopolymers größer ist als die des Copolymers. Das kann eine besonders gute Formbarkeit des Trägers während des Herstellungsverfahrens ermöglichen. Ferner kann das Homopolymer dadurch ein besonders gutes Einbetten des Feststoffmaterials ermöglichen. Besonders vorteilhaft kann es deshalb sein, wenn das Homopolymer des Polypropylens ein solches ist, welches eine Schmelze-Massefließrate (230°C, 2,16 kg) von ≥ 5g/10min, beispielsweise ≥ 20g/10min, besonders bevorzugt ≥ 50g/10min aufweist, beispielsweise bis ≤ 80g/10min. Die Schmelze-Massefließrate kann dabei bestimmbar sein nach ISO 1133.

Weiterhin kann es vorteilhaft sein, wenn das Homopolymer eine Zugfestigkeit nach ISO 527-2 aufweist, die in einem Bereich liegt von ≥ 30 MPa bis ≤ 45 MPa, beispielsweise in einem Bereich von ≥ 35 MPa bis ≤ 40 MPa, um eine gute Stabilität zu erreichen.

Ferner kann insbesondere für eine gute Stabilität es von Vorteil sein, wenn das Homopolymer ein Biegemodul nach ISO 178 aufweist in einem Bereich von ≥ 1000 MPa bis ≤ 2200 MPa, beispielsweise in einem Bereich von ≥ 1300 MPa bis ≤ 1900 MPa, etwa in einem Bereich von ≥ 1500 MPa bis ≤ 1700 MPa.

Bezüglich der Zugfverformung des Homopolymers nach ISO 527-2 kann es ferner von Vorteil sein, wenn diese in einem Bereich liegt von ≥ 5% bis ≤ 13%, beispielsweise in einem Bereich von ≥ 8% MPa bis ≤ 10%.

Für eine besonders vorteilhafte Herstellbarkeit kann es vorgesehen sein, dass die Vicat-Erweichungstemperatur nach ISO 306/A für ein spritzgegossenes Bauteil, in einem Bereich liegt von ≥ 130°C MPa bis ≤ 170°C, beispielsweise in einem Bereich von ≥ 145°C bis ≤ 158°C.

Das Copolymer dagegen kann insbesondere der mechanischen Festigkeit des Trägermaterials beziehungsweise des Trägers dienen, da ein Copolymer oftmals eine insbesondere mit Bezug auf das Homopolymer vergleichsweise große Härte aufweist. Besonders vorteilhaft kann es dabei sein, dass das Copolymer eine Kugelhärte (ball indentation hardness) nach ISO 2039-1 von ≥ 15 MPa, beispielsweise ≥ 30MPa, besonders bevorzugt ≥ 40MPa, beispielsweise ≥ 45MPa, etwa bis ≤ 65 MPa, aufweist. Insbesondere kann die Kugelhärte des Copolymers größer sein als die des Homopolymers.

Besonders vorteilhaft kann es ferner sein, wenn das Copolymer des Polypropylens ein solches ist, welches eine Schmelze-Massefließrate aufweist von ≥ 4g/10min bis ≤ 12g/10min, beispielsweise von ≥ 6g/10min bis ≤ 9g/10min. Die Schmelze-Massefließrate kann dabei bestimmbar sein nach ISO 1183.

Ferner kann insbesondere für eine gute Stabilität es von Vorteil sein, wenn das Copolymer ein Zugmodul nach ISO 527-1, -2 aufweist in einem Bereich von ≥ 900 MPa bis ≤ 1400 MPa, beispielsweise in einem Bereich von ≥ 1100 MPa bis ≤ 1250 MPa.

Bezüglich der Zugfestigkeit nach ISO 527-1, -2 des Copolymers kann es ferner von Vorteil sein, wenn diese in einem Bereich liegt von von ≥ 15 MPa bis ≤ 27 MPa, beispielsweise in einem Bereich von ≥ 18 MPa bis ≤ 24 MPa. Insbesondere kann die Zugfestigkeit des Copolymers kleiner sein als die des Homopolymers.

Für eine vorteilhafte Herstellbarkeit kann es ferner vorteilhaft sein, dass die Wärmeformbeständigkeit, insbesondere eine Wärmeformbeständigkeit B (0,45MPa), nicht getempert, nach ISO 75B-1, -2, in einem Bereich liegt von ≥ 50°C MPa bis ≤ 110°C, beispielsweise in einem Bereich von ≥ 70°C bis ≤ 90°C.

Somit kann bereits innerhalb des Matrixmaterials eine besonders einfache und gute Steuerung der Eigenschaften des Matrixmaterials und damit des Trägermaterials möglich sein. Eine derartige Steuerung kann somit erfolgen durch ein einfaches Auswählen des entsprechenden Homopolymere beziehungsweise Copolymere und durch die Auswahl der entsprechenden Gewichtsanteile.

Mit Bezug auf die Verteilung von Homopolymer und Copolymer kann es bevorzugt sein, dass das Homopolymer bezogen auf das Polypropylen in einem Anteil von ≥ 10 Gew.-% bis ≤ 40 Gew.-%, beispielsweise in einem Anteil von ≥ 20 Gew.-% bis ≤ 30 Gew.-%, vorliegt, etwa in einem Anteil von ≥ 23 Gew.-% bis ≤ 28 Gew.-%, und/oder dass das Copolymer bezogen auf das Polypropylen in einem Anteil von ≥ 60 Gew.-% bis ≤ 90 Gew.-%, beispielsweise in einem Anteil von ≥ 70 Gew.-% bis ≤ 80 Gew.-%, etwa in einem Anteil von ≥ 72 Gew.-% bis ≤ 76 Gew.-%, vorliegt, insbesondere wobei das Polypropylen aus dem Homopolymer und dem Copolymer besteht. Beispielsweise kann der Anteil des Homopolymers bei 26 Gew.-% liegen und kann der Anteil des Copolymers bei 74 Gew.-% liegen. Insbesondere mit einer derartigen Ausgestaltung des Polypropylens können besonders vorteilhafte Eigenschaften des Polypropylens als Matrixmaterials erreicht werden. Im Detail konnte in überraschender Weise gefunden werden, dass insbesondere die vorbeschriebenen Anteile des Homopolymers beziehungsweise des Copolymers eine gute Verarbeitbakeit mit einer guten Stabilität verbinden.

Weiterhin kann es bevorzugt sein, dass die Dichte des Copolymers größer oder gleich der Dichte des Homopolymers ist. Auch dieses Merkmal kann zu einer besonders bevorzugten Herstellbarkeit in Kombination mit besonders vorteilhaften mechanischen Eigenschaften, insbesondere einer besonders guten Stabilität eines mit dem vorbeschriebenen Trägermatrial hergestellten Paneels führen. Beispielsweise kann die Dichte des Homopolymers nach ISO 1183 in einem Bereich von ≥ 0,85 g/cm³ bis ≤ 0,95 g/cm³, etwa von ≥ 0,89 g/cm³ bis ≤ 0,91 g/cm³, beispielsweise bei 0,900 g/cm³, liegen. Weiter beispielsweise kann die Dichte des Copolymers nach ISO 1183 in einem Bereich von ≥ 0,86 g/cm³ bis ≤ 0,96 g/cm³, etwa von ≥ 0,895 g/cm³ bis ≤ 0,915 g/cm³, beispielsweise bei 0,905 g/cm³, liegen.

Weiterhin kann es bevorzugt sein, dass das Matrixmaterial Polyethylen in Form von LDPE (low density polyethylene) umfasst. Derartige Materialien bieten den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann. Darüber hinaus ist LDPE kostengünstig erhältlich.

Insbesondere, wenn das Matrixmaterial LDPE umfasst, kann es vorgesehen sein, dass das Matrixmaterial frei von einem Haftvermittler ist. Diese Ausgestaltung kann es ermöglichen, dass das Trägermaterial besonders kostengünstig ist, da auf eine Komponente, welche dem Matrixmaterial in Abhängigkeit des verwendeten Polymers des Matrixmaterials zugegeben werden sollte verzichtet werden kann. Darüber hinaus kann das Bereitstellen des Trägermaterials weiter vereinfacht werden.

Es kann weiterhin vorgesehen sein, dass das Trägermaterial aus wenigstens einem polymeren Kunststoff als Matrixmaterial, Talkum und gegebenenfalls einem Haftvermittler, besteht. Insbesondere in dieser Ausgestaltung kann eine Herstellung besonders kostengünstig möglich sein und kann die Prozessführung besonders einfach sein. Denn das Trägermaterial besteht lediglich aus Talkum, einer polymeren Matrix, die beispielsweise aus einem homogenen Kunststoffinaterial bestehen kann, und insbesondere in Abhängigkeit des verwendeten Kunststoffs einem Haftvermittler, welcher in an sich bekannter Weise mit Bezug auf den Kunststoff ausgewählt werden kann.

Es kann weiterhin vorteilhaft sein, dass das Feststoffmaterial neben Talkum wenigstens einen weiteren Feststoff aufweist. Diese Ausgestaltung kann es insbesondere ermöglichen, dass das Gewicht des Trägermaterials beziehungsweise eines mit dem Trägermaterial ausgebildeten Paneels verglichen mit einem Trägermaterial beziehungsweise Paneel, bei dem das Feststoffmaterial aus Talkum besteht, deutlich reduziert sein kann. Somit kann der dem Feststoffmaterial zugesetzte Feststoff insbesondere eine verglichen mit Talkum reduzierte Dichte aufweisen. Beispielsweise kann der zugesetzte Stoff eine Rohdichte aufweisen, die in einem Bereich liegt von ≤ 2000 kg/m³, insbesondere von ≤ 1500 kg/m³, beispielsweise von ≤ 1000 kg/m³, besondere bevorzugt von ≤ 500 kg/m³. In Abhängigkeit des zugesetzten Feststoffs kann dabei ferner eine weitere Adaptierbarkeit an die gewünschten insbesondere mechanischen Eigenschaften ermöglicht werden.

Beispielhaft kann der weitere Feststoff ausgewählt sein aus der Gruppe bestehend aus Holz, etwa in Form von Holzmehl, Blähton, Vulkanasche, Bims, Porenbeton, insbesondere anorganischen Schäumen, Cellulose. Mit Bezug auf Porenbeton kann dies beispielsweise der von der Firma Xella unter dem Markennamen YTONG verwendete Feststoff sein, der im Wesentlichen aus Quarzsand, Kalk und Zement besteht, beziehungsweise kann der Porenbeton die vorgenannten Bestandteile aufweisen. Mit Bezug auf den zugesetzten Feststoff kann dieser Beispielsweise aus Partikeln aufgebaut sein, die die gleiche Partikelgröße beziehungsweise Partikelgrößenverteilung aufweisen, wie die vorstehend für Talkum vorbeschriebenen Partikelgrößen beziehungsweise Partikelgrößenverteilungen. Die weiteren Feststoffe können insbesondere in einem Anteil in dem Feststoffmaterial vorliegen, der in einem Bereich von < 50 Gew.-%, insbesondere < 20 Gew.-%, beispielsweise < 10 Gew.-%, weiter beispielsweise < 5 Gew.-%, liegt.

Alternativ kann es beispielsweise für Holz, insbesondere für Holzmehl vorgesehen sein, dass dessen Partikelgröße zwischen >0µm und ≤600µm mit einer bevorzugten Partikelgrößenverteilung D₅₀ von ≥400µm liegt.

Des Weiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen.

Beispielsweise kann das Trägermaterial als Granulat vorliegen und dabei etwa eine zylindrische Form aufweisen. Ferner können unabhängig von der Form aber beispielhaft bei der zylindrischen Form die Granulatpartikel einen Durchmesser in einem Bereich von ≥ 2mm bis ≤ 3mm, beispielsweise 2mm oder 3mm, und eine Länge von ≥ 2mm bis ≤ 9mm, beispielsweise von ≥ 2mm bis ≤ 7mm oder von ≥ 5mm bis ≤ 9mm, aufweisen.

Zusammenfassend bietet das vorbeschriebene Trägermaterial somit den Vorteil einer guten Herstellbarkeit bei gleichzeitig hoher Dimensionsstabilität insbesondere bezüglich Feuchte- und Temperatureinfluss und guten mechanischen Eigenschaften.

Mit Bezug auf weitere technische Merkmale und Vorteile des vorbeschriebenen Trägermaterials wird hiermit explizit auf die Beschreibung des Paneels, des Verfahrens und auf die Figuren verwiesen.

Die vorliegende Erfindung betrifft ferner ein dekoriertes Paneel, insbesondere ein dekoriertes Wand- oder Bodenpaneel, aufweisend einen Träger und ein auf dem Träger aufgebrachtes Dekor, insbesondere wobei auf dem Dekor eine mit einer Struktur versehene Deckschicht aufgebracht ist. Ein derartiges Paneel ist dadurch gekennzeichnet, dass der Träger ein Trägermaterial aufweist, wie dies vorstehend im Detail beschrieben ist. Mit Bezug auf die spezifischen Merkmale wird somit auf die vorstehende Beschreibung verwiesen.

Ferner können die Randbereiche des Paneels strukturiert beziehungsweise profiliert sein, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Insbesondere bei Nut- und/oder Federprofilen sind dabei elastische Werkstoffe von Vorteil, da durch diese allein derartige Profile erzeugbar sind, welche besonders einfach handhabbar und stabil sind. So sind insbesondere keine weiteren Materialien notwendig, um die Verbindungselemente zu erzeugen.

Zusammenfassend kann das vorbeschriebene Paneel den Vorteil einer hohen Dimensionsstabilität mit Bezug auf Hitze- und Feuchtigkeitseinfluss bei gleichzeitig guten mechanischen Eigenschaften bieten. Ferner kann ein derartiges Paneel sehr stabil sein und gleichzeitig eine hohe Elastizität aufweisen, was insbesondere für eine effektive und kostengünstige Ausgestaltung von Verbindungselementen an dem Randbereich des Trägers und ferner bezüglich einer Trittschalldämmung von Vorteil sein kann.

Mit Bezug auf weitere technische Merkmale und Vorteile des Paneels wird hiermit explizit auf die Beschreibung des Trägermaterials, des Verfahrens und auf die Figuren verwiesen.

Mit der Erfindung wird ferner ein Verfahren zur Herstellung eines dekorierten Wand- oder Bodenpaneels vorgeschlagen, aufweisend die Verfahrensschritte:
a) Bereitstellen eines schüttfähigen Trägermaterials, insbesondere eines Granulats, wobei das Trägermaterial ausgestaltet ist, wie dies vorstehend im Detail beschrieben ist,
b) Anordnen des Trägermaterials zwischen zwei bandartigen Fördermitteln,
c) Formen des Trägermaterials unter Einwirkung von Temperatur unter Ausbildung eines bahnförmigen Trägers,
d) Komprimieren des Trägers,
e) Behandeln des Trägers unter Einwirkung von Druck unter Verwendung einer Zweibandpresse,
f) gegebenenfalls Abkühlen des Trägers,
g) gegebenenfalls Aufbringen eines Dekoruntergrunds auf zumindest einen Teilbereich des Trägers;
h) gegebenenfalls Aufbringen eines eine Dekorvorlage nachbildenden Dekors auf zumindest einen Teilbereich des Trägers, und
i) gegebenenfalls Aufbringen einer Schutzschicht auf zumindest einen Teilbereich des Dekors.

Ferner können sich die folgenden Schritte anschließen:
j) Strukturieren der Schutzschicht, und
k) Behandeln des Trägers zur elektrostatischen Entladung und gegebenenfalls zur elektrostatischen Beladung vor wenigstens einem der vorgenannten Verfahrensschritte, insbesondere vor einem der Verfahrensschritte d) bis i), etwa vor Verfahrensschritt h).

Es konnte überraschender Weise gezeigt werden, dass es durch das vorbeschriebene Verfahren es ermöglicht werden kann, eine besonders vorteilhafte Herstellung insbesondere eines Trägers eines Wand- oder Bodenpaneels zu ermöglichen. Dabei kann das Verfahren besonders vorteilhaft sein durch eine Verwendung des Trägermaterials, wie dies vorstehend im Detail beschrieben ist.

Dabei wurde insbesondere gefunden, dass durch das hier beschriebene Verfahren es ermöglicht werden kann, eine besonders glatte und definiert einstellbare Oberfläche des Trägers zu erhalten, welche beispielsweise für die weitere Verarbeitung zu einem Paneel, insbesondere bei dem Aufbringen eines Dekors, beispielsweise durch Direktdruck, besonders von Vorteil sein kann.

Zunächst wird gemäß dem vorliegenden Verfahren ein Träger beziehungsweise ein Kern erzeugt. Das vorbeschriebene Verfahren umfasst hierfür gemäß Verfahrensschritt a) zunächst das Bereitstellen eines schüttfähigen Trägermaterials. Das Trägermaterial dient als Basis zur Herstellung von insbesondere plattenförmigen Trägern für Paneele. Diesbezüglich wird vollumfänglich auf die vorstehenden Ausführungen Bezug genommen.

In besonders vorteilhafter Weise kann das Trägermaterial als schüttfähiger Feststoff beziehungsweise als Granulat bereitgestellt werden, wobei das Granulat in Abhängigkeit des verwendeten Materials rein beispielhaft etwa eine Korngröße in einem Bereich von ≥ 100µm bis ≤ 10mm aufweisen kann. Eine bevorzugte Schüttung beziehungsweise Verteilung des Trägermaterials kann dabei eine Abweichung der Schüttdichte von ≤5%, insbesondere ≤ 3% aufweisen.

Gemäß Verfahrensschritt b) wird das schüttfähige, insbesondere granulare, Trägermaterial zwischen zwei bandartigen Fördermitteln angeordnet. Im Detail wird ein unteres bandartiges Fördermittel umlaufend verfahren und in einem definierten Abstand zu dem unteren Fördermittel wird ein oberes bandartiges Fördermittel umlaufend verfahren. Das Trägermaterial kann so auf das untere Fördermittel aufgebracht werden und anschließend durch das untere und das obere Fördermittel begrenzt werden. Durch eine exakte Streuung kann dabei auf eine seitliche Begrenzung verzichtet werden. Durch die beiden Fördermittel kann das Trägermaterial somit zu beziehungsweise durch einzelne Bearbeitungsstationen gefördert und zu einem Träger verarbeitet werden. Weiterhin kann das Trägermaterial bereits in diesem Verfahrensschritt vorgeformt werden. Somit können die bandartigen Fördermittel zwei Funktionen übernehmen, nämlich die eines Transportmittels und die einer Form.

Dabei können die bandartigen Fördermittel zumindest im Bereich der Zweibandpresse, wie dies nachfolgend beschrieben ist, zumindest teilweise aus Teflon beziehungsweise aus Polytetrafluorethylen (PTFE) ausgestaltet sein. Beispielsweise können die Bänder vollständig aus Polytetrafluorethylen geformt sein, oder es können Bänder verwendet werden, welche mit einer Außenbeschichtung aus Polytetrafluorethylen versehen sind. In letzterem Fall können etwa glasfaserverstärkte Kunststoffbänder oder Stahlbänder mit einer Beschichtung aus Polytetrafluorethylen Verwendung finden. Durch derartige Fördermittel kann aufgrund der Antihafteigenschaften dieses Werkstoffs eine besonders definierte beispielsweise glatte Oberfläche des erzeugten Trägers erzeugbar sein. So kann verhindert werden, dass das geförderte Trägermaterial an den Fördermitteln anhaftet und so die Oberflächenstruktur unmittelbar oder durch anhaftendes Material in einem nächsten Zyklus negativ beeinflusst.

Darüber hinaus ist Polyterafluorethylen auch bei hohen Temperaturen beständig gegen Chemikalien wie auch gegen eine Zersetzung, so dass zum Einen eine problemlose Temperaturbehandlung des Trägermaterials möglich ist und die Fördermittel ferner auch für einen langen Zeitraum stabil sind. Darüber hinaus kann das Trägermaterial frei wählbar sein.

Die Fördermittel können dabei die gesamte Vorrichtung durchlaufen, oder können unterbrochen sein und als mehrere Fördermittel ausgestaltet sein.

Das Anordnen des Trägermaterials gemäß Verfahrensschritt b) kann dabei insbesondere mittels eines oder einer Mehrzahl an Streuköpfen realisierbar sein, welche das Trägermaterial definiert etwa aus Lagerbehältern austragen können. Dabei kann ferner ein Rakel vorgesehen sein, welches das Material in Vertiefungen der Walze streicht. Anschließend kann das Material mit Hilfe einer rotierenden Bürstwalze aus der Streuwalze ausgetragen werden, wobei es gegen eine Prallfläche trifft und von dort auf das Fördermittel gleitet. Um die Streubreite zu regulieren kann ferner eine Streubreiteneinstellung vorgesehen sein. In dieser Ausgestaltung kann ein besonders homogenes Austragen des Trägermaterials erfolgen, was gleichermaßen zu einem homogenen Träger mit definierter Qualität führen kann.

Beispielsweise kann ein Streukopf oder können zwei, drei oder mehr Streuköpfe vorgesehen sein. Dadurch kann der Träger auf besonders einfache Weise besonders maßschneiderbar sein, indem beispielsweise eine gewünschte Materialmischung bereitgestellt werden kann. In dieser Ausgestaltung kann die Mischung problemlos während des Herstellungsprozesses oder zwischen zwei Chargen angepasst werden, so dass eine besonders große Variabilität sichergestellt werden kann. Darüber hinaus kann durch eine unterschiedliche Bestückung der einzelnen Streuköpfe eine Mischung für das Trägermaterial erst unmittelbar vor der Verarbeitung erzeugt werden, so dass eine negative Beeinflussung der verschiedenen Komponenten untereinander und eine dadurch bedingte Verringerung der Qualität des hergestellten Trägers verhindert werden kann.

Beispielsweise kann ein Sensor zum Überprüfen des Anordnens des Trägermaterials zwischen den zwei bandartigen Fördermitteln vorgesehen sein, etwa mit Bezug auf das Flächengewicht des aufgetragenen Materials beziehungsweise die Homogenität.

In einem weiteren Schritt erfolgt gemäß Verfahrensschritt c) ein Formen des zwischen den bandartigen Fördermitteln angeordneten Trägermaterials unter Einwirkung von Temperatur beziehungsweise Wärme. In diesem Verfahrensschritt erfolgt durch die einwirkende Wärme beziehungsweise Hitze somit ein Aufschmelzen beziehungsweise Erweichen des Trägermaterials oder zumindest eines Teils desselben, wodurch beispielsweise das Granulat formbar werden kann. In diesem Zustand kann es den zwischen den Fördermitteln sich ausbildenden Aufhahmeraum homogen ausfüllen und so einen bahnförmigen Träger ausbilden, der weiter behandelt werden kann.

Der so ausgebildete bahnförmige Träger kann gleichzeitig zu oder nach Verfahrensschritt c) folgend gemäß Verfahrensschritt d) komprimiert werden. Dieser Verfahrensschritt kann insbesondere in einer geeigneten Presse beziehungsweise Walze erfolgen. Es erfolgt hier somit ein erstes Verdichten des bahnförmigen Trägers. Bei diesem Schritt kann der Träger bereits im Wesentlichen seine gewünschte Dicke erhalten, so dass bei folgenden Bearbeitungsschritten lediglich ein geringfügiges Verdichten erfolgen braucht und die weiteren Schritte somit besonders schonend verlaufen können, wie dies nachstehend im Detail erläutert wird. Dabei kann insbesondere sichergestellt werden, dass die Temperatur des Trägers soweit abgekühlt ist, dass eine geeignete Komprimierbarkeit unter Erhalt des gewünschten Ergebnisses ermöglicht werden kann.

In einem weiteren Verfahrensschritt e) erfolgt nun ein weiteres Behandeln des Trägers unter Einwirkung von Druck unter Verwendung einer Zweibandpresse. In diesem Verfahrensschritt können insbesondere die Oberflächeneigenschaften des Trägers eingestellt werden beziehungsweise kann die Dicke des Trägers zumindest im Wesentlichen voreingestellt werden. Hierzu kann der zuvor verdichtete Träger unter Einwirkung von Druck behandelt werden, wobei insbesondere der Druck gering gewählt werden kann derart, dass diese Komprimierung lediglich in einem sehr geringen Bereich stattfindet. Somit kann die Ausgestaltung der Bearbeitungsvorrichtung in diesem Verfahrensschritt insbesondere gewählt werden in Abhängigkeit einer gewünschten Einstellung der Komprimierung, was besonders schonend und effektiv sein kann.

Dabei kann insbesondere das Verwenden einer Zweibandpresse von Vorteil sein, da mit einer derartigen Presse besonders schonende Komprimierungsschritte möglich sind und ferner die Oberflächengüte beziehungsweise Dicke des Trägers besonders effektiv und definiert eingestellt werden kann. Weiterhin kann insbesondere das Verwenden einer Bandpresse hohe Liniengeschwindigkeiten ermöglichen, so dass der gesamte Prozess einen besonders hohen Durchlauf ermöglichen kann. Darüber hinaus kann etwa durch das Vorsehen von Pneumatikzylindern eine besonders gleichmäßige und definiert einstellbare Bandspannung der Zweibandpresse ermöglicht werden.

Ein Glätten beiziehungsweise das Einstellen der Oberflächengüte kann dabei in diesem Schritt bedeuten, dass zwar die oberste Oberfläche geglättet wird, etwa bereits eingebrachte Strukturen beziehungsweise Poren jedoch nicht oder nur in einem definierten Bereich beeinflusst werden, so dass diese auch nach diesem Verfahrensschritt noch in gewünschter Weise vorliegen können, insoweit dies erwünscht ist. Dies kann insbesondere durch die Verwendung einer Bandpresse mit geeignetem Temperaturprofil und mit geeigneten Druckwerten ermöglicht werden, oder durch einen Kalander, wie dies nachstehend im Detail beschrieben ist.

Insbesondere bei einer Erhitzung des Trägers beziehungsweise Trägermaterials in vorangegangenen Verfahrensschritten kann es bevorzugt vorgesehen sein, dass der Träger während oder vor Verfahrensschritt e) gekühlt wird, insbesondere unter den Schmelzpunkt oder den Erweichungspunkt eines Kunststoffbestandteils des Trägermaterials. In anderen Worten kann der Träger vor oder in der Zweibandpresse gekühlt werden. Dabei kann ein Kühlen nur in einem begrenzten Bereich erfolgen, so dass der Träger zwar noch eine verglichen zu der Raumtemperatur (22°C) erhöhte Temperatur aufweist, jedoch unterhalb der zuvor eingestellten erhöhten Temperatur liegt und dabei bevorzugt und in Abhängigkeit des verwendeten Kunststoffs, unterhalb den Schmelzpunkt oder den Erweichungspunkt des in dem Trägermaterial enthaltenen Kunststoffs. Insbesondere durch eine Kühlung des Trägers kann ein Schüsseln beziehungsweise ein Auftreten von Lunkern oder Poren verhindert werden, so dass die Oberfläche des Trägers besonders hochwertig sein kann. Geeignete Temperaturen liegen beispielsweise und nicht beschränkend in einem Bereich von unterhalb von 130°C, insbesondere unterhalb von 120°C, etwa in einem Bereich von ≥ 80°C bis ≤ 115°C für Polyethylen.

Mit Bezug auf die Komprimierung des Trägers in der Zweibandpresse kann es vorgesehen sein, dass Verfahrensschritt e) realisiert unter Ausbildung eines Komprimierungsfaktors K1 des Trägers. Unter einem Komprimierungsfaktor K kann insbesondere verstanden werden, ein Faktor, um welchen sich die Dicke des Trägers durch den Behandlungsschritt reduziert. So liegt bei einer ursprünglichen Dicke des Trägers vor der Behandlung von 5mm und einer Dicke des Trägers nach der Behandlung von 4mm nach der Behandlung eine Dicke von 80% bezogen auf die Dicke vor der Behandlung vor beziehungsweise wurde die Dicke um 20% reduziert. Entsprechend liegt ein Komprimierungsfaktor K1 von 0,2 vor.

Beispielhafte Komprimierungsfaktoren für den Verfahrensschritt e) liegen etwa in einem Bereich von >0, etwa ≥ 0,1 bis ≤ 0,3, beispielsweise ≥ 0,15 bis ≤ 0,25.

Das vorbeschriebene Behandeln des Trägers bei Verfahrensschritt e) erfolgt bei einer Temperatur T1. Diese Temperatur kann beispielsweise in einem Bereich von ≥ 150°C bis ≤ 190°C, beispielsweise von ≥ 160°C bis ≤ 180°C, etwa bei 170°C ablaufen. Dadurch dass der Träger einen Kunststoffbestandteil aufweist, ist der Träger in diesem Temperaturbereich vergleichsweise weich und daher insbesondere entlang seiner gesamten Dicke formbar, so dass eine Komprimierung auch unter Anwendung geringer Anpressdrücke der Zweibandpresse besonders effektiv ablaufen kann. Dieser Verfahrensschritt kann somit insbesondere einem Einstellen beziehungsweise Kalibrieren der Dicke des Trägers dienen.

Optional kann nach dem vorbeschriebenen Verfahrensschritt e) ein weiteres Behandeln des Trägers unter Einwirkung von Druck bei einer Temperatur T2 unter Ausbildung eines Komprimierungsfaktors K2 des Trägers erfolgen, wobei T2 < T1 und wobei K2 < K1. Dabei beziehen sich insbesondere die Temperaturen T1 und T2 insbesondere auf die auf den Träger einwirkende Temperatur, so dass es möglich ist, dass der Träger nicht oder nicht in seiner gesamten Dicke zwingend die gleiche Temperatur aufweist. Dieser Verfahrensschritt umfasst somit einen weiteren Behandlungsvorgang des Trägers unter Anwendung von Druck, der sich beispielsweise aber nicht beschränkend unmittelbar an den Verfahrensschritt e) anschließen kann. Insbesondere wird die Temperatur T2 vorzugsweise nicht durch ein bloßes Abkühlen während des Behandelns des Trägers durch fehlendes Erhitzen eingestellt, sondern vielmehr durch die definierte Einwirkung eines jeweiligen Temperiermittels, wie etwa durch aktives Kühlen durch ein jeweiliges Temperiermittel.

Die Temperatur T2 während des Verfahrensschritts f) kann, beispielsweise unter Verwendung eines Trägers es ermöglichen, dass die Viskosität des Trägers geringer ist beziehungsweise dass der Träger härter ist, als bei der in Verfahrensschritt e) verwendeten Temperatur T1.

Dieser Verfahrensschritt f) kann somit insbesondere dazu dienen, den Träger nicht mehr signifikant zu komprimieren beziehungsweise die Dicke des Trägers zu reduzieren, sondern vielmehr dazu, die Oberflächeneigenschaften des Trägers einzustellen und den Träger beziehungsweise seine Oberfläche daher hauptsächlich zu glätten.

Beispielsweise und in keiner Weise beschränkend kann bei diesem Verfahrensschritt eine Komprimierung erfolgen, die in einem Bereich von insbesondere >0% liegen kann, die jedoch begrenzt sein kann auf Werte in einem Bereich von ≤ 20%, wobei der Träger somit im Anschluss eine Dicke von 80% mit Bezug auf seine Dicke vor dem Verfahrensschritt f) aufweist. Mit Bezug auf den Komprimierungsfaktor K2 ist dieser somit geringer als der Komprimierungsfaktor K1. Beispielhafte Komprimierungsfaktoren liegen etwa in einem Bereich von > 0 bis ≤ 0.2, etwa in einem Bereich von > 0,03 bis ≤ 0,15, etwa ≥ 0,05 bis ≤ 0,12<, beispielhaft bei 0,1.

In dem Nachglätten kann etwa eine Temperatur eingestellt werden, die oberhalb der Kristallisierungstemperatur des Kunststoffs liegt. Für den Fall von linearem Polyethylen (LLDPE) als Bestandteil des Trägers, beispielsweise, kann etwa ein Erhitzen auf eine Temperatur in einem Bereich von ≥ 100°C bis ≤ 150°C, beispielsweise von 120°C, ausreichend und angemessen sein. Grundsätzlich kann daher die Temperatur T2 derart eingestellt werden, dass diese in einem Bereich von ≥ 100°C bis ≤ 150°C, beispielsweise von 120°C, liegt.

Durch den vorbeschriebenen mehrstufigen Komprimierungsvorgang kann eine sehr genaue und homogene Dicke insbesondere für Paneel-Trägermaterialien erzielbar sein und sich ferner eine besonders hohe Oberflächengüte ausbilden.

Das Nachglätten kann beispielsweise in der Zweibandpresse erfolgen, etwa durch das Einstellen eines Temperaturgradienten entlang der Verfahrrichtung des Trägers. Alternativ kann es vorgesehen sein, dass Verfahrensschritt e) und das zuvor beschriebene Nachglätten in zwei voneinander getrennten Presseinrichtungen durchgeführt werden. Dabei kann beispielsweise eine weitere Zweibandpresse oder auch ein Kalander zum Nachglätten Verwendung finden. Für den Fall, dass beispielsweise eine Zweibandpresse Verwendung findet, kann diese bei Verfahrensschritt f) insbesondere ein Metallband, wie beispielsweise ein Stahlband, umfassen, um einen geeigneten Pressdruck auch bei dem gewählten Temperaturbereich zu ermöglichen. Bei Verfahrensschritt e) kann dabei aufgrund der vergleichsweise höheren Temperatur bereits ein Kunststoffband ausreichen.

In einer weiteren bevorzugten Ausgestaltung kann es vorgesehen sein, dass der Träger zwischen den Verfahrensschritten e) und f) auf eine Temperatur T3 abgekühlt wird, wobei T3 < T1 und wobei T3 < T2. In einer weiteren bevorzugten Ausgestaltung kann es vorgesehen sein, dass der Träger vor oder bei Verfahrensschritt f) auf eine Temperatur erhitzt wird, die oberhalb der Kristallisierungstemperatur eines in dem Träger vorliegenden Kunststoffs liegt.

Im weiteren Verlauf erfolgt in einem weiteren Verfahrensschritt g) anschließend gegebenenfalls ein Abkühlen des bahnförmigen Trägers. Der Träger kann insbesondere durch das Vorsehen einer Kühlvorrichtung mit definierten Kühlstufen auf eine Temperatur abgekühlt werden, welche der Raumtemperatur entspricht oder rein beispielhaft in einem Bereich von bis zu 20°C darüber liegt. Beispielsweise kann eine Mehrzahl an Kühlzonen vorliegen, um ein definiertes Abkühlen des Trägers zu ermöglichen.

Es kann ferner vorgesehen sein, dass der Träger nach Verfahrensschritt f), insbesondere unmittelbar nach Verfahrensschritt f) und/oder beispielsweise vor dem Aufbringen weiterer Schichten auf den Träger, auf eine Temperatur erhitzt wird, die oberhalb der Kristallisierungstemperatur eines, beispielsweise sämtlicher, in dem Träger vorliegenden Kunststoffes liegt. Anschließend kann der Träger wiederum unter die Kristallisierungstemperatur, beispielsweise auf Raumtemperatur (22°C), abgekühlt werden. Insbesondere, wenn der Träger nach dem Behandeln des Trägers gemäß Verfahrensschritt f) und insbesondere nach einem Abkühlen des Träges nach Verfahrensschritt f) erneut erhitzt wird auf eine Temperatur, die oberhalb der Kristallisierungstemperatur des Kunststoffs des Trägermaterials liegt, können die Eigenschaften des Trägers noch weiter verbessert werden.

Beispielsweise kann der Träger verbesserte Stabilitätseigenschaften aufweisen, insbesondere hinsichtlich seiner mechanischen und/oder thermischen und/oder chemischen Beständigkeit. Dadurch kann die Qualität des Trägers weiter verbessert werden.

Die Kristallisierungstemperatur ist dabei im Sinne der vorliegenden Erfindung insbesondere die Temperatur, auf welche das Polymer erhitzt werden muss, um anschließend beim Abkühlen Kristalle ausbilden zu können. Insbesondere beginnt die Kristallbildung bei einem Abkühlen des Polymers bei einer Temperatur, die unterhalb der Schmelztemperatur und gegebenenfalls oberhalb der Glasübergangstemperatur liegen kann. Entsprechend kann ein Erhitzen auf eine Temperatur unterhalb der Schmelztemperatur des jeweiligen Kunststoffes oder auf eine Temperatur unterhalb der Schmelztemperatur ausreichen. Für den Fall von linearem Polyethylen (LLDPE) kann beispielsweise ein Erhitzen auf eine Temperatur in einem Bereich von ≥ 100°C bis ≤ 150°C, beispielsweise von 120°C, ausreichend sein. Für den Fall von Polypropylen kann beispielsweise ein Erhitzen auf eine Temperatur in einem Bereich von ≥ 160°C bis ≤ 200°C, beispielsweise von 180°C, ausreichend sein.

Die Dauer des entsprechenden Erhitzens kann somit in für den Fachmann verständlicher Weise abhängen von der Verfahrgeschwindigkeit des Trägers, von seiner Dicke und von der einzustellenden Temperatur.

Nach einem Abkühlen des erzeugten Trägers kann der Träger zunächst in bahnartiger Form oder als vereinzelte plattenartige Träger als Zwischenprodukt gelagert werden und das Verfahren kann zunächst beendet sein. Vorzugsweise schließen sich jedoch unmittelbar weitere Behandlungsschritte an, welche etwa ohne ein Anschleifen realisierbar sein können, insbesondere um den bereitgestellten Träger derart zu bearbeiten, um ein fertiges Paneel zu erzeugen, wie dies nachstehend im Detail erläutert ist.

Zur Herstellung eines fertigen Paneels kann das Verfahren die weiteren folgenden Verfahrensschritte umfassen, um den Träger mit einem Dekor zu versehen und dieses mit einer Schutzschicht zu beschichten. Dabei werden die nachfolgenden Schritte bevorzugt unmittelbar mit dem erzeugten bahnförmigen Träger durchgeführt. Es ist von der Erfindung jedoch ebenfalls mit umfasst, dass der bahnförmige Träger vor einem geeigneten der Verfahrensschritte g) bis i) zunächst in eine Vielzahl plattenförmiger Träger unterteilt wird und/oder der plattenförmigen Träger durch die entsprechend folgenden Verfahrensschritte weiter behandelt wird. Die nachstehenden Erläuterungen gelten für beide Alternativen entsprechend, wobei zur Vereinfachung im Weiteren von einer Behandlung des Trägers gesprochen wird.

Es kann ferner gegebenenfalls zunächst etwa vor dem Verfahrensschritt h) ein Vorbehandeln des Trägers zur elektrostatischen Entladung und gegebenenfalls anschließender elektrostatischer Beladung erfolgen. Dies kann insbesondere dazu dienen, das Auftreten von Unschärfen im Laufe der Dekoraufbringung zu vermeiden.

Gemäß Verfahrensschritt g) kann weiterhin gegebenenfalls ein Dekoruntergrund auf zumindest einen Teilbereich des Trägers aufgebracht werden. Beispielsweise kann zunächst ein Primer insbesondere für Druckverfahren als Dekoruntergrund aufgebracht werden, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann.

Ein derartiger Druckuntergrund ist sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet. Zur Aufbringung der Harzschicht kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥5 g/m² und ≤40 g/m², vorzugsweise ≥10 g/m² und ≤30 g/m² aufgetragen werden. Ferner kann ein Papier oder Vlies mit einer Grammatur zwischen ≥30 g/m² und ≤80 g/m², vorzugsweise zwischen ≥40 g/m² und ≤70 g/m² auf den plattenförmigen Träger aufgebracht.

Weiterhin kann gemäß Verfahrensschritt h) ein Aufbringen eines eine Dekorvorlage nachbildenden Dekors auf zumindest einen Teilbereich des Trägers erfolgen. Dabei kann das Dekor durch den sogenannten Direktdruck aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet-Verfahren oder Laserdruck-Verfahren eingesetzt werden.

Die Dekorschichten können ferner aus einer insbesondere strahlungshärtbaren Farbe und/oder Tinte ausgebildet werden. Beispielsweise kann eine UV-härtbare Farbe oder Tinte verwendet werden.

Dabei können die Dekorschichten jeweils in einer Dicke in einem Bereich von ≥ 5 µm bis ≤ 10µm aufgebracht werden.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv-Beizen beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Gemäß Verfahrensschritt i) kann ein Aufbringen einer Schutzschicht auf zumindest einen Teilbereich des Dekors vorgesehen sein. Eine derartige Schicht zum Schutz des aufgebrachten Dekors kann insbesondere als Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Beispielsweise kann es vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

Des Weiteren kann es vorgesehen sein, dass in die Schutzschicht beziehungsweise Verschleiß- oder Deckschicht eine Strukturierung, insbesondere eine mit dem Dekor übereinstimmende Oberflächenstrukturierung durch das Einbringen von Poren eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Weiterhin kann es vorgesehen sein, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalze oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

Darüber hinaus kann auf der der Dekorseite gegenüberliegenden Seite ein Gegenzug aufgebracht werden.

Das vorstehend beschriebene Verfahren ermöglicht das Erzeugen eines Paneels mit einem Träger, der eine besonders hohe Feuchte- und Temperaturresistenz aufweist.

In einer weiteren bevorzugten Ausgestaltung kann es vorgesehen sein, dass vor Verfahrensschritt e) ein Trennmittel derart angeordnet wird, dass es zumindest in der Zweibandpresse zwischen dem Träger und einem Fördermittel, etwa dem oberen oder dem unteren Fördermittel, vorzugsweise zwischen dem Träger und beiden Fördermitteln, angeordnet ist. In dieser Ausgestaltung kann ein Anhaften des Trägers an einem Fördermittel besonders effektiv verhindert werden. Das Trennmittel kann beispielsweise auf einer ersten Rolle aufgerollt sein und zusammen mit dem Träger durch die Zweibandpresse und gegebenenfalls die weitere Presseinheit, wie etwa den Kalander, geführt werden, bevor es auf eine weitere Rolle aufgerollt wird. Vorzugsweise liegt zwischen dem Trennmittel und dem Träger keine Relativgeschwindigkeit vor. In anderen Worten bewegt sich das Trennmittel vorzugsweise in der gleichen Geschwindigkeit, wie der Träger. Beispielsweise kann das Trennmittel ein Trennpapier umfassen, wie beispielsweise ein Ölpapier. Unter einem auch als Wachspapier bezeichneten Ölpapier kann dabei in an sich bekannter Weise ein beispielsweise holzfreies Papier verstanden werden, welches eine organische Substanz, etwa ein Öl beziehungsweise Wachs oder Paraffin aufweist, beispielsweise mit diesem getränkt ist.

Gemäß einer weiteren Ausgestaltung kann Verfahrensschritt d) durchgeführt wird unter Verwendung einer S-Walze. Durch das Verwenden einer S-Walze als Komprimierungseinheit kann ein gewünschtes Komprimieren mit einem einfachen und kostengünstigen Mittel definiert auch bei hohen Liniengeschwindigkeiten ermöglicht werden. Um die entsprechende und in Abhängigkeit des gewünschten Ergebnisses geeignete Kraft einstellen zu können, kann die Walze beispielsweise in Richtung auf das durchlaufende Trägermaterial verstellbar sein. Dabei kann die S-Walze beispielsweise nur eine Walze umfassen, welche eine Kraft ausübt nur in Kombination mit einer Gegenkraft durch die Bandspannung der Fördermittel. Alternativ kann eine oder eine Mehrzahl an Gegenwalzen vorgesehen sein, welche die entsprechende Gegenkraft aufbringen.

Unter einer S-Walze kann im Sinne der Erfindung eine Walze verstanden werden, welche derart angeordnet ist, dass der Träger sie s-förmig umläuft, wie es für den Fachmann bekannt ist und nachstehend mit Bezug auf die Figuren im Detail beschrieben ist.

Ferner kann gegebenenfalls in der Zweibandpresse ein Temperaturgradient eingestellt werden. Dies kann insbesondere durch einen Temperaturgradienten in einer zu der Förderrichtung senkrechten Richtung ermöglicht werden. In dieser Ausgestaltung kann eine besonders hohe Liniengeschwindigkeit erlaubt werden, da etwa ein besonders schnelles Aufheizen ermöglicht werden kann, was eben eine hohe Liniengeschwindigkeit erlaubt. Dabei kann weiterhin eine zu hohe Temperatureinwirkung auf das Trägermaterial verhindert werden, was Beschädigungen verhindern und eine besonders hohe Qualität ermöglichen kann. Darüber hinaus kann etwa ein Entgasen bei einer Erhitzung des Trägermaterials verbessert und beschleunigt werden, was wiederum eine hohe Liniengeschwindigkeit erlaubt und ferner durch das Verhindern von Gaseinschlüssen eine besonders hohe Stabilität und Qualität ermöglichen kann. Dabei letzteren Fall kann insbesondere der Bereich unterhalb des Trägermaterials höher erhitzt werden, als der Bereich oberhalb des Trägermaterials, also etwa ein unteres Temperierelement eine höhere Temperatur aufweisen, als ein oberes Temperierelement. Beispielsweise kann hier ein Temperaturgradient in einem Bereich von 50°C vorteilhaft sein.

Mit Bezug auf weitere technische Merkmale und Vorteile des vorbeschriebenen Verfahrens wird explizit auf die vorstehende Beschreibung des Trägermaterials und des Paneels Bezug genommen.

Die Erfindung ist nachfolgend anhand der Figuren sowie eines Ausführungsbeispiels weiter erläutert.
Fig. 1 zeigt schematisch eine Ausgestaltung einer erfindungsgemäßen Vorrichtung zum Durchführen eines Teils des erfindungsgemäßen Verfahrens; und
Fig. 2 zeigt eine beispielhafte S-Walze zum Durchführen eines Verfahrensschritts des erfindungsgemäßen Verfahrens.

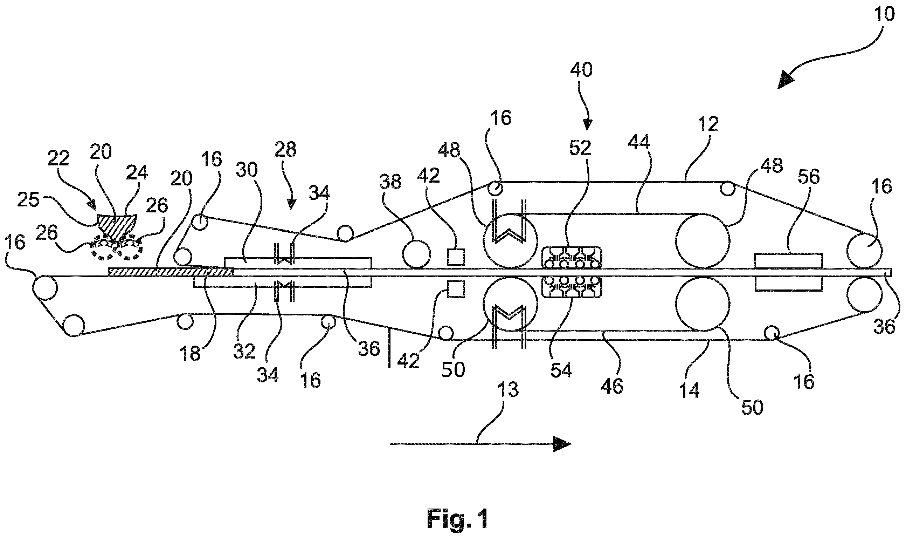

Die Vorrichtung 10 nach Figur 1 ist geeignet für ein Verfahren zur Herstellung eines dekorierten Wand- oder Bodenpaneels. Dabei werden bezüglich Figur 1 insbesondere Bearbeitungsstationen für die folgenden Verfahrensschritte beschrieben:
a) Bereitstellen eines schüttfähigen Trägermaterials 20, insbesondere eines Granulats,
b) Anordnen des Trägermaterials 20 zwischen zwei bandartigen Fördermitteln, 12, 14
c) Formen des Trägermaterials 20 unter Einwirkung von Temperatur unter Ausbildung eines bahnförmigen Trägers 36,
d) Komprimieren des Trägers 36,
e) Behandeln des Trägers 36 unter Einwirkung von Temperatur und Druck, insbesondere unter Verwendung einer Zweibandpresse,
f) gegebenenfalls Abkühlen des Trägers 36.

An diese Verfahrensschritte anschließend kann das Verfahren weitere Verfahrensschritte aufweisen, um das fertige Wand- oder Bodenpaneel zu erhalten.

Die Vorrichtung 10 gemäß Figur 1 umfasst zunächst zwei umlaufende bandartige Fördermittel 12, 14, welche insbesondere durch Umlenkrollen 16 derart geführt sind, dass sich zwischen ihnen ein Aufhahmeraum 18 zum Aufnehmen und bearbeiten eines bereitgestellten schüttfähigen, insbesondere granularen Trägermaterials 20 ausbildet. Das Trägermaterial 20 weist ein einen Kunststoff aufweisendes Matrixmaterial und ein Feststoffmaterial auf, wobei das Feststoffmaterial zu wenigstens 50 Gew.-%, insbesondere zu wenigstens 80 Gew.-%, insbesdonere zu wenigstens 95 Gew.-%, bezogen auf das Feststoffmaterial, durch Talkum gebildet ist, wobei das Matrixmaterial in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt und wobei das Feststoffmaterial, bezogen auf das Trägermaterial, in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt, und wobei das Trägermaterial und das Feststoffmaterial gemeinsam, bezogen auf das Trägermaterial 20, in einer Menge von ≥ 95 Gew.-%, insbesondere ≥ 99 Gew.-%, vorliegen.

Insbesondere kann das Trägermaterial 20 ferner bereitgestellt werden unter Verwendung eines Knetmischers, bei dem die Ausgangsmaterialien mit einer Schnecke vermischt und gefördert werden und so durch eine Lochscheibe gepresst und etwa durch einen Schrägabschneider in kleine Partikel zerteilt werden, um so ein Granulat zu erhalten.

Die Fördermittel 12, 14 können zumindest teilweise aus Polytetrafluorethylen ausgestaltet sein, beispielsweise damit beschichtet sein. Weiterhin können die Fördermittel 12, 14 zumindest teilweise, insbesondere auf ihrer dem Aufnahmeraum 18 zugewandten Seite, geraut beziehungsweise strukturiert sein. Ferner können die Fördermittel 12, 14 etwa eine Breite in einem Bereich von etwa 1,5m aufweisen.

Um das Trägermaterial 20 zwischen den bandartigen Fördermitteln 12, 14 beziehungsweise in dem Aufnahmeraum 18 anzuordnen, ist eine Austrageinheit 22 mit einem oder einer Mehrzahl an Austragköpfen 24 vorgesehen, durch welche das Trägermaterial 20 auf dem unteren Fördermittel 14 anordbar ist. Die Austragköpfe 24 können dabei einen Trichter 25 umfassen, der das Trägermaterial 20 auf entsprechende Streuwalzen 26 aufbringt, woraufhin das Trägermaterial 20 auf das untere Fördermittel 14 gestreut werden kann.

Um ein homogenes Auftragen des Trägermaterials 20 auf dem unteren Fördermittel 14 sicherzustellen, kann ein Sensor zum Überprüfen des Anordnens des Trägermaterials 20 zwischen zwei bandartigen Fördermitteln 12, 14 vorgesehen sein. Der Sensor kann insbesondere mit der Austrageinheit 22 gekoppelt sein, um eine potentiell ungenaue Befüllung des Aufhahmeraums 18 unmittelbar zu korrigieren.

Um ein besonders homogenes Verteilen des Trägermaterials 20 zu ermöglichen, können ferner Vibratoren vorgesehen sein. Diese können etwa auf das untere Fördermittel 14 einwirken und dabei beispielsweise unter dem unteren Fördermittel 14 angeordnet sein, so dass das Trägermaterial 20 fein verteilt wird.

Um eine ungewünschte Verunreinigung und eine Beschädigung nachfolgender Bearbeitungsstationen zu verhindern, kann ferner ein Sensor zum Detektieren von Metallen vorgesehen sein, welcher ungewollt eingefügtes Metall detektieren kann.

In der Förderrichtung der Fördermittel 12, 14, welche durch den Pfeil 13 gekennzeichnet ist, ist ferner eine Formeinheit 28 vorgesehen, welche dazu ausgestaltet ist, das Trägermaterial 20 unter Einwirkung von Temperatur beziehungsweise Hitze zum Verschmelzen des Trägermaterials 20 unter Ausbildung eines bahnförmigen Trägers 36 zu formen. Hierzu kann die Formeinheit 28 etwa zwei plattenartige Formeinrichtungen 30, 32 aufweisen, welche durch eine oder eine Mehrzahl an Heizeinrichtungen 34, etwa mittels eines Thermoöls, heizbar sind. Dadurch kann das Trägermaterial 20 erhitzt werden, bis es, abhängig etwa von dem Schmelzpunkt des Trägermaterials 20 oder eines Teils desselben, eine Temperatur von beispielhaft und in Abhängigkeit des verwendeten Materials, etwa von ≥ 180°C bis ≤ 200°C, erreicht hat. Hierzu kann die Formeinheit 28 beziehungsweise können die Formeinrichtungen 30, 32 beispielsweise auf eine Temperatur von bis zu 250°C erhitzt werden. Dabei kann beispielsweise eine oder zur Einstellung eines Temperaturgradienten eine Mehrzahl an unabhängig einstellbaren Heizbereichen vorgesehen sein. Beispielsweise können die gesamten Formeinrichtungen 30, 32, welche etwa eine Länge von mehreren Metern aufweisen können, beheizbar sein, oder nur ein Teil derselben kann heizbar sein.

Weiterhin kann die Formeinheit 28 insbesondere einen parallelen Spalt aufweisen, der durch die plattenartige Formeinrichtungen 30, 32 gebildet sein kann. Dabei kann jedoch am Einlauf durch eine konische Form ein Einlaufmaul vorgesehen sein, um einen verbesserten Einlauf des Trägermaterials 20 zu ermöglichen. Die auf das Trägermaterial 20 wirkende Kraft kann dabei in einem Bereich von > 0 kg/m² bis zu ≤ 1kg/m² liegen. Dabei kann insbesondere ein gleichmäßige Druckbeaufschlagung ohne das Vorsehen eines Druckprofils beziehungsweise eines Druckgradienten vorgesehen sein.

In der Figur 1 ist ferner zu erkennen, dass die untere Formeinrichtung 32 länger ist, als die obere Formeinrichtung 30 und ferner vor der oberen beginnt. Dadurch kann erreicht werden, dass eine Bearbeitung erst erfolgt, wenn das Trägermaterial 20 bereits geschmolzen oder zumindest angeschmolzen und zumindest teilweise erweicht ist. Dadurch kann ein besonders definierter Formgebungsprozess ermöglicht werden.

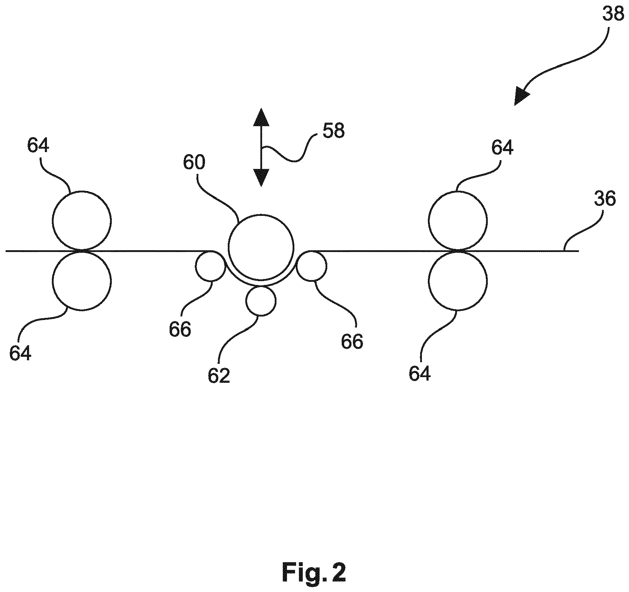

Im weiteren Verlauf in Förderrichtung der Fördereinheiten 12, 14 wird der bandartige Träger 36 durch eine Presseinrichtung 38 geführt. Die Presseinrichtung 38 kann beispielsweise eine S-Walze umfassen, welche im Detail in der Figur 2 gezeigt ist. Die S-Walze kann dabei im Wesentlichen senkrecht zu der Oberfläche des Trägers 36 und damit zu der Verfahrrichtung des Trägers 36 verfahrbar sein, wie dies der Pfeil 58 andeutet, so dass die gewünschten Drücke besonders vorteilhaft einstellbar sein können. Ferner kann die Presseinrichtung 38 beispielsweise auf den Träger 36 einen Druck ausüben, der in einem Bereich von ≥ 1kg/m² bis ≤ 3kg/m² liegen kann. Die S-Walze umfasst dabei eine Hauptwalze 60, welche auf den bahnförmigen Träger 36 einwirkt. Unter Umständen kann dabei die Bandspannung als Gegendruck ausreichen, wobei es jedoch bevorzugt ist, dass wenigstens eine Gegendruckwalze 62 vorgesehen ist. Für ein geeignetes Führen des bahnartigen Trägers 36 können ferner zwei Paare von Kalanderwalzen 64 und gegebenenfalls Umlenkwalzen 66 vorgesehen sein, welche ferner für eine geeignete Bandspannung sorgen können. In der Figur 2 ist dabei zu erkennen, dass der bahnartige Träger 36 um die Umlenkwalzen 66 und die Hauptwalze 60 zweifach S-förmig geführt wird, welche Führung den Begriff S-Walze bedingt. Im Detail kann die Hauptwalze 60 durch den bahnförmigen Träger 36 in einem Bereich von ungefähr 50% oder mehr umschlungen sein. Die Temperatur des Trägers 36 entspricht bei einem Einlauf in die Presseinrichtung 38 ferner insbesondere der beim Ausgang aus der Formeinheit 28 vorliegenden Temperatur.

Von der Presseinrichtung 38 wird der Träger 36 im Weiteren zu einer weiteren Presseinrichtung 40 geführt. Um einen etwaigen Wärmeverlust des Trägers 36 ausgleichen oder den Träger 36 bewusst weiter zu erhitzen oder auch zu kühlen, kann zwischen den Presseinrichtungen 38, 40 eine oder eine Mehrzahl weiterer Temperiereinrichtungen 42 vorgesehen sein.

Zurückkommend zu der Presseinrichtung 40 kann dieses vorteilhafter Weise eine Zweibandpresse sein, welche insbesondere Stahlbänder 44, 46 aufweisen kann und wobei die Bänder 44, 46 der Zweibandpresse durch Umlenkrollen 48, 50 geführt sein können. Die Umlenkrollen 48, 50 können beispielsweise beheizt sein, etwa mittels einer Thermoölheizung und/oder die Rollen auf der gleichen Seite des Spalts können etwa einen Abstand in einem Bereich von ≥1m bis ≤ 2m, beispielsweise 1,5m von einander angeordnet sein, wobei die Bänder 44, 46 eine Breite in einem Bereich von etwa 1,5m aufweisen können. Gemäß Figur 1 wird der sich zwischen den Fördermitteln 12, 14 befindliche Träger 20 zwischen die Umlenkrollen 48, 50 und somit zwischen die Bänder 44, 46, wie insbesondere Stahlbänder geführt. Auf der dem Träger 36 gegenüberliegenden Seite der Bänder 44, 46 sind jeweils Press- und/oder Heizeinrichtungen 52, 54 vorgesehen. Diese können die Fördereinrichtungen 12, 14 und damit den Träger 36 sowohl erhitzen, als auch geringfügig komprimieren. Hierzu kann etwa eine Luft-Heizung vorgesehen sein und eine Mehrzahl an Rollen, welche ein intermittierendes Pressen ermöglichen können. Dabei kann eine Temperatur in einem Bereich von bis zu 250°C auf den Träger 36 einwirken. Beispielsweise kann die Temperatur in einem Bereich von ≥ 25°C bis ≤ 35°C oberhalb der Schmelztemperatur beziehungsweise Erweichungstemperatur des Trägermaterials oder eines Teils desselben liegen. Weiterhin kann ein derartiger Druck auf den Träger 36 einwirken, dass der Träger 36 bei Verfahrensschritt e) um einen Faktor von ≤ 7,5%, vorzugsweise ≤ 5%, beispielsweis in einem Bereich von ≥0,1mm bis ≤ 0,2mm komprimiert wird. Die Press- und/oder Heizeinrichtungen 52, 54 können dabei im Wesentlichen den gesamten Bereich zwischen den Umlenkrollen 48, 50 einnehmen, oder auch nur einen entlang der Förderrichtung begrenzten Bereich. Nach Durchlaufen der Presseinrichtung 40 kann der Träger etwa eine Temperatur in einem Bereich von 190°C aufweisen.

Die Presseinrichtung 40 kann dabei ein veränderliches Druckprofil aufweisen, etwa beginnend mit 6mm und endend mit 4,1mm, oder vorteilhaft als isochore Presse ausgestaltet sein.

In der Förderrichtung hinter der Presseinrichtung 40 ist gemäß Figur 1 eine Kühleinrichtung 56 angeordnet, durch welche der Träger auf eine Temperatur abgekühlt werden kann, welche beispielsweise in einem Bereich von ≤ 35°C liegt. Dabei kann die Kühleinrichtung 56 beispielsweise auf einer Wasserkühlung basieren und etwa mehrere Kühlzonen umfassen, um eine definierte Kühlung unter Verwendung genau anpassbarer Kühlprogramme zu ermöglichen. Die Länge der Kühlzone kann dabei der wirksamen Länge der Presseinrichtung 40 entsprechen. Im Anschluss an die Kühleinrichtung 56 kann etwa noch ein weiteres Kühlband vorgesehen sein.

Nach diesen Verfahrensschritten kann der Träger 36, der etwa eine Enddicke in einem Bereich von ≥ 3mm bis ≤ 5mm, beispielsweise 4,1mm, aufweisen kann, unmittelbar weiterbehandelt werden, oder gelagert werden, etwa als bahnförmiger Träger 36 oder als bereits vereinzelter plattenförmiger Träger 36.

An dieser Stelle können sich die weiteren Verfahrensschritte anschließen:
g) gegebenenfalls Aufbringen eines Dekoruntergrunds auf zumindest einen Teilbereich des Trägers 36;
h) Aufbringen eines eine Dekorvorlage nachbildenden Dekors auf zumindest einen Teilbereich des Trägers 36,
i) Aufbringen einer Schutzschicht auf zumindest einen Teilbereich des Dekors,
j) gegebenenfalls Strukturieren der Schutzschicht, und
k) gegebenenfalls Behandeln des Trägers 36 zur elektrostatischen Entladung vor einem der vorgenannten Verfahrensschritte.

### Bezugszeichen:

- 10: Vorrichtung
- 12: bandartiges Fördermittel
- 13: Pfeil
- 14: bandartiges Fördermittel
- 16: Umlenkrolle
- 18: Aufhahmeraum
- 20: Trägermaterial
- 22: Austrageinheit
- 24: Austragkopf
- 25: Trichter
- 26: Streuwalze
- 28: Formeinheit
- 30: Formeinrichtung
- 32: Formeinrichtung
- 34: Heizeinrichtung
- 36: bandartiger Träger
- 38: Presseinrichtung
- 40: Presseinrichtung
- 42: Temperiereinrichtung
- 44: Stahlbänder
- 46: Stahlbänder
- 48: Umlenkrolle
- 50: Umlenkrolle
- 52: Press- und/oder Heizeinrichtung
- 54: Press- und/oder Heizeinrichtung
- 56: Kühleinrichtung
- 58: Pfeil
- 60: Hauptwalze
- 62: Gegendruckwalze
- 64: Kalanderwalze
- 66: Umlenkwalze

## Patentansprüche

1. Trägermaterial zur Herstellung eines Trägers (36) für ein dekoriertes Wand- oder Bodenpaneel, wobei das Trägermaterial (20) ein einen Kunststoff aufweisendes Matrixmaterial und ein Feststoffmaterial aufweist, wobei das Feststoffmaterial zu wenigstens 50 Gew.-%, insbesondere zu wenigstens 80 Gew.-%, insbesondere zu wenigstens 95 Gew.-%, bezogen auf das Feststoffmaterial, durch Talkum gebildet ist, wobei das Matrixmaterial in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt und wobei das Feststoffmaterial, bezogen auf das Trägermaterial, in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt, und wobei das Matrixmaterial und das Feststoffmaterial gemeinsam, bezogen auf das Trägermaterial (20), in einer Menge von ≥ 95 Gew.-%, insbesondere ≥ 99 Gew.-%, vorliegen, wobei das Matrixmaterial Polypropylen umfasst, **dadurch gekennzeichnet, dass** das Polypropylen eine Mischung aus einem Homopolymer und einem Copolymer aufweist, wobei die Schmelzflussrate des Homopolymers größer ist als die Schmelzflussrate des Copolymers.

2. Trägermaterial nach Anspruch 1, **dadurch gekennzeichnet, dass** Talkum in Form von Partikeln vorliegt, die eine Partikelgröße D₅₀ aufweisen in einem Bereich von ≥ 3 µm bis ≤ 6µm, vorzugsweise in einem Bereich von ≥ 4µm bis ≤ 5µm, und/oder dass Talkum in Form von Partikeln vorliegt, die eine Partikelgröße D₉₈ aufweisen in einem Bereich von ≥ 10µm bis ≤ 30µm, vorzugsweise in einem Bereich von ≥ 15µm bis ≤ 20µm.

3. Trägermaterial nach Anspruch 1 oder 2, **dadurch gekennzeichnet, dass** die Kugelhärte des Copolymers größer ist als die Kugelhärte des Homopolymers.

4. Trägermaterial nach einem der Ansprüche 1 bis 3, **dadurch gekennzeichnet, dass** das Homopolymer des Polypropylens eine Schmelz-Massefließrate von ≥ 5g/10min, beispielsweise ≥ 20g/10min, besonders bevorzugt ≥ 50g/10min, aufweist.

5. Trägermaterial nach einem der Ansprüche 1 bis 4, **dadurch gekennzeichnet, dass** das Copolymer eine Kugelhärte von ≥ 15 MPa, beispielsweise ≥ 30MPa, besonders bevorzugt ≥ 40MPa, aufweist.

6. Trägermaterial nach einem der Ansprüche 1 bis 5, **dadurch gekennzeichnet, dass** das Homopolymer, bezogen auf das Polypropylen, in einem Anteil von ≥ 10 Gew.-% bis ≤ 40 Gew.-%, beispielsweise in einem Anteil von ≥ 20 Gew.-% bis ≤ 30 Gew.-%, vorliegt, und/oder dass das Copolymer bezogen auf das Polypropylen in einem Anteil von ≥ 60 Gew.-% bis ≤ 90 Gew.-%, beispielsweise in einem Anteil von ≥ 70 Gew.-% bis ≤ 80 Gew.-%, vorliegt.

7. Trägermaterial nach einem der Ansprüche 1 bis 6, **dadurch gekennzeichnet, dass** die Dichte des Copolymers größer oder gleich der Dichte des Homopolymers ist.

8. Trägermaterial nach einem der Ansprüche 1 bis 7, **dadurch gekennzeichnet, dass** das Matrixmaterial Polyethylen in Form von LDPE umfasst.

9. Trägermaterial nach Anspruch 8, **dadurch gekennzeichnet, dass** das Matrixmaterial frei von einem Haftvermittler ist.

10. Trägermaterial nach einem der Ansprüche 1 bis 9, **dadurch gekennzeichnet, dass** das Trägermaterial (20) aus wenigstens einem Kunststoff, Talkum und gegebenenfalls einem Haftvermittler besteht.

11. Trägermaterial nach einem der Ansprüche 1 bis 9, **dadurch gekennzeichnet, dass** das Feststoffmaterial neben Talkum wenigstens einen weiteren Feststoff aufweist.

12. Trägermaterial nach Anspruch 11, **dadurch gekennzeichnet, dass** der weitere Feststoff eine Rohdichte aufweist, die in einem Bereich liegt von ≤ 2000 kg/m³, insbesondere von ≤ 1500 kg/m³, beispielsweise von ≤ 1000 kg/m³, besondere bevorzugt von ≤ 500 kg/m³ und/oder dass der weitere Feststoff ausgewählt ist aus der Gruppe bestehend aus Holz, Blähton, Vulkanasche, Bims, Porenbeton, Schäumen und Cellulose.

13. Dekoriertes Paneel, insbesondere dekoriertes Wand- oder Bodenpaneel, aufweisend einen Träger (36) und ein auf dem Träger (36) aufgebrachtes Dekor, insbesondere wobei auf dem Dekor eine mit einer Struktur versehene Deckschicht aufgebracht ist, **dadurch gekennzeichnet, dass** der Träger (36) ein Trägermaterial (20) nach einem der Ansprüche 1 bis 12 aufweist.

14. Verfahren zur Herstellung eines dekorierten Wand- oder Bodenpaneels, aufweisend die Verfahrensschritte:
a) Bereitstellen eines schüttfähigen Trägermaterials (20), insbesondere eines Granulats, wobei das Trägermaterial (20) gemäß einem der Ansprüche 1 bis 12 ausgestaltet ist,
b) Anordnen des Trägermaterials (20) zwischen zwei bandartigen Fördermitteln (12, 14),
c) Formen des Trägermaterials (20) unter Einwirkung von Temperatur unter Ausbildung eines bahnförmigen Trägers (36),
d) Komprimieren des Trägers (36),
e) Behandeln des Trägers (36) unter Einwirkung von Druck unter Verwendung einer Zweibandpresse,
f) gegebenenfalls Abkühlen des Trägers (36),
g) gegebenenfalls Aufbringen eines Dekoruntergrunds auf zumindest einen Teilbereich des Trägers (36);
h) gegebenenfalls Aufbringen eines eine Dekorvorlage nachbildenden Dekors auf zumindest einen Teilbereich des Trägers (36), und
i) gegebenenfalls Aufbringen einer Schutzschicht auf zumindest einen Teilbereich des Dekors.

## Claims

1. Carrier material for producing a carrier (36) for a decorated wall or floor panel, wherein the carrier material (20) comprises a plastic-containing matrix material and a solid material, wherein the solid material is formed by talc to at least 50 wt.-%, in particular at least 80 wt.-%, in particular at least 95 wt.-%, based on the solid material, wherein the matrix material, based on the carrier material, is present in an amount of ≥ 30 wt.-% to ≤ 70 wt.-%, in particular ≥ 40 wt.-% to ≤ 60 wt.-%, and wherein the solid material, based on the carrier material, is present in an amount of ≥ 30 wt.-% to ≤ 70 wt.-%, in particular ≥ 40 wt.-% to ≤ 60 wt.-%, and wherein the matrix material and the solid material, based on the carrier material (20), are present together in an amount of ≥ 95 wt.-%, in particular ≥ 99 wt.-%, and wherein the matrix material comprises polypropylene;
**characterized in that**
the polypropylene comprises a mixture of a homopolymer and a copolymer, wherein the melt flow rate of the homopolymer is greater than the melt flow rate of the copolymer.

2. Carrier material according to claim 1, **characterized in that** talc is present in the form of particles which have a particle size D₅₀ in a range from ≥ 3 µm to ≤ 6 µm, preferably in a range from ≥ 4 µm to ≤ 5 µm, and/or that talc is present in the form of particles which have a particle size D₉₈ in a range from ≥ 10 µm to ≤ 30 µm, preferably in a range from ≥ 15 µm to ≤ 20 µm.

3. Carrier material according to claim 1 or 2, **characterized in that** the spherical hardness of the copolymer is greater than the spherical hardness of the homopolymer.

4. Carrier material according to any one of claims 1 to 3, **characterized in that** the homopolymer of the polypropylene has a melt mass flow rate of ≥ 5 g/10 min, for example ≥ 20 g/10 min, particularly preferably ≥ 50 g/10 min.

5. Carrier material according to any one of claims 1 to 4, **characterized in that** the copolymer has a spherical hardness of ≥ 15 MPa, for example ≥ 30 MPa, particularly preferably ≥ 40 MPa.

6. Carrier material according to any one of claims 1 to 5, **characterized in that** the homopolymer, based on the polypropylene, is present in an amount of ≥ 10 wt.-% to ≤ 40 wt.-%, for example in an amount of ≥ 20 wt.-% to ≤ 30 wt.-%, and/or that the copolymer, based on the polypropylene, is present in an amount of ≥ 60 wt.-% to ≤ 90 wt.-%, for example in an amount of ≥ 70 wt.-% to ≤ 80 wt.-%.

7. Carrier material according to any one of claims 1 to 6, **characterized in that** the density of the copolymer is greater than or equal to the density of the homopolymer.

8. Carrier material according to any one of claims 1 to 7, **characterized in that** the matrix material comprises polyethylene in the form of LDPE.

9. Carrier material according to claim 8, **characterized in that** the matrix material is free of an adhesion promoter.

10. Carrier material according to any one of claims 1 to 9, **characterized in that** the carrier material (20) consists of at least one plastic, talc and optionally an adhesion promoter.

11. Carrier material according to any one of claims 1 to 9, **characterized in that** the solid material comprises at least one further solid in addition to talc.

12. Carrier material according to claim 11, **characterized in that** the further solid has a bulk density in a range of ≤ 2000 kg/m³, in particular ≤ 1500 kg/m³, for example ≤ 1000 kg/m³, particularly preferably ≤ 500 kg/m³, and/or that the further solid is selected from the group consisting of wood, expanded clay, volcanic ash, pumice, aerated concrete, foams and cellulose.

13. Decorated panel, in particular decorated wall or floor panel, comprising a carrier (36) and a decoration applied onto the carrier (36), in particular wherein a cover layer provided with a structure is applied onto the decoration, **characterized in that** the carrier (36) comprises a carrier material (20) according to any one of claims 1 to 12.

14. Method for producing a decorated wall or floor panel, comprising the process steps:
a) providing a pourable carrier material (20), in particular a granulate, wherein the carrier material (20) is configured according to any one of claims 1 to 12;
b) arranging the carrier material (20) between two belt-like conveying means (12, 14);
c) forming the carrier material (20) under the action of temperature while forming of a web-shaped carrier (36);
d) compressing the carrier (36);
e) treating the carrier (36) under the action of pressure by use of a double-belt press;
f) optionally cooling the carrier (36);
g) optionally applying a decoration subsurface onto at least a partial area of the carrier (36);
h) optionally applying a decoration reproducing a decoration template onto at least a partial area of the carrier (36); and
i) optionally applying a protective layer onto at least a partial area of the decoration.

## Revendications

1. Matériau support pour la fabrication d'un support (36) destiné à un panneau mural ou de sol décoré, où le matériau support (20) présente un matériau matriciel thermoplastique présentant une matière plastique, et un matériau de charge, où le matériau de charge est formé par du talc à au moins 50 % en poids, en particulier, à au moins 80 % en poids, notamment à au moins 95 % en poids, par rapport au matériau de charge, où le matériau matriciel est présent dans une quantité ≥ 30 % en poids à ≤ 70 % en poids, en particulier, ≥ 40 % en poids à ≤ 60 % en poids, par rapport au matériau support, et où le matériau de charge est présent dans une quantité ≥ 30 % en poids à ≤ 70 % en poids, en particulier, ≥ 40 % en poids à ≤ 60 % en poids, par rapport au matériau support, et où le matériau matriciel et le matériau de charge ensemble sont présents dans une quantité ≥ 95 % en poids, en particulier, ≥ 99 % en poids, par rapport au matériau support (20), où le matériau matriciel comprend du polypropylène,
**caractérisé en ce que**
le polypropylène est un mélange à base d'un homopolymère et d'un copolymère, où la vitesse d'écoulement en masse fondue de l'homopolymère est supérieure à la vitesse d'écoulement en masse fondue du copolymère.

2. Matériau support selon la revendication 1, **caractérisé en ce que** le talc est présent sous forme de particules, qui ont une taille particulaire D₅₀ dans une plage ≥ 3 µm à ≤ 6 µm, de préférence dans une plage ≥ 4 µm à ≤ 5 µm, et/ou que le talc est présent sous forme de particules qui présentent une taille particulaire D₉₈ dans une plage ≥ 10 µm à ≤ 30 µm, de préférence dans une plage ≥ 15 µm à ≤ 20 µm.

3. Matériau support selon la revendication 1 ou la revendication 2, **caractérisé en ce que** la dureté à la pénétration d'une bille du copolymère est supérieure à la dureté à la pénétration d'une bille de l'homopolymère.

4. Matériau support selon l'une des revendications 1 à 3, **caractérisé en ce que** l'homopolymère du polypropylène présente une vitesse d'écoulement en masse fondue ≥ 5 g/10 min, par exemple, ≥ 20 g/10 min, de manière particulièrement préférée, ≥ 50 g/10 min.

5. Matériau support selon l'une des revendications 1 à 4, **caractérisé en ce que** le copolymère présente une dureté à la pénétration d'une bille ≥ 15 MPa, par exemple, ≥ 30 MPa, de manière particulièrement préférée ≥ 40 MPa.

6. Matériau support selon l'une des revendications 1 à 5, **caractérisé en ce que** l'homopolymère est présent dans une proportion ≥ 10 % en poids à ≤ 40 % en poids, par exemple, dans une proportion ≥ 20 % en poids à ≤ 30 % en poids, par rapport au polypropylène, et/ou que le copolymère est présent dans une proportion ≥ 60 % en poids à ≤ 90 % en poids, par exemple, dans une proportion ≥ 70 % en poids à ≤ 80 % en poids, par rapport au polypropylène,

7. Matériau support selon l'une des revendications 1 à 6, **caractérisé en ce que** la densité du copolymère est égale ou supérieure à la densité de l'homopolymère.

8. Matériau support selon l'une des revendications 1 à 7, **caractérisé en ce que** le matériau matriciel comprend du polyéthylène sous la forme de LDPE.

9. Matériau support selon la revendication 8, **caractérisé en ce que** le matériau matriciel est exempt de promoteur d'adhésion.

10. Matériau support selon l'une des revendications 1 à 9, **caractérisé en ce que** le matériau support (20) est constitué d'au moins une matière plastique, de talc et éventuellement d'un promoteur d'adhésion.

11. Matériau support selon l'une des revendications 1 à 9, **caractérisé en ce que** le matériau de charge présente au moins une charge supplémentaire en plus du talc.

12. Matériau support selon la revendication 11, **caractérisé en ce que** la charge supplémentaire présente une densité apparente qui se situe dans une plage ≤ 2000 kg/m³, notamment ≤ 1500 kg/m³, par exemple ≤ 1000 kg/m³, de manière particulièrement préférée ≤ 500 kg/m³, et/ou que la charge supplémentaire est choisie dans le groupe constitué du bois, de l'argile expansée, de la cendre volcanique, de la pierre ponce, du béton poreux, de mousses et de la cellulose.

13. Panneau décoratif, notamment panneau mural ou de sol décoré, présentant un support (36) et un décor appliqué sur le support (36), notamment, où une couche de couverture munie d'une structure est appliquée sur le décor, **caractérisé en ce que** le support (36) présente un matériau support (20) selon l'une des revendications 1 à 12.

14. Procédé de fabrication d'un panneau mural ou de sol décoré, présentant les étapes de procédé :
a) de mise au point d'un matériau support (20) pouvant être déversé en vrac, notamment de granulés, où le matériau support (20) est conçu selon l'une des revendications 1 à 12,
b) de disposition du matériau support (20) entre deux systèmes de transport (12, 14) de type bandes,
c) de façonnage du matériau support (20) sous l'effet de la température moyennant la formation d'un support (36) en forme de bande,
d) de compression du support (36),
e) de traitement du support (36) sous l'effet de la pression moyennant l'utilisation d'une presse à deux bandes,
f) éventuellement, de refroidissement du support (36),
g) éventuellement, d'application d'un fond de décor sur au moins une zone partielle du support (36) ;
h) éventuellement, d'application d'un décor reproduisant un modèle de décor sur au moins une zone partielle du support (36), et
i) éventuellement, d'application d'une couche de protection sur au moins une zone partielle du décor.
